Europäisches Patentamt

European Patent Office

Office européen des brevets

(11) Publication number: **0 176 332**
**B1**

# EUROPEAN PATENT SPECIFICATION

(45) Date of publication of patent specification: **21.06.89**

(51) Int. Cl.⁴: **G 11 B 7/12**

(21) Application number: **85306736.1**

(22) Date of filing: **23.09.85**

(54) Optical pick-up.

(30) Priority: **28.09.84 JP 146806/84 u**

(43) Date of publication of application:
**02.04.86 Bulletin 86/14**

(45) Publication of the grant of the patent:
**21.06.89 Bulletin 89/25**

(84) Designated Contracting States:
**AT CH DE FR GB IT LI**

(56) References cited:
**EP-A-0 068 757**
**AT-B- 347 711**
**DE-A-3 214 591**
**DE-B-2 007 198**
**US-A-3 311 711**

(73) Proprietor: **SONY CORPORATION**
**7-35 Kitashinagawa 6-Chome Shinagawa-ku**
**Tokyo 141 (JP)**

(72) Inventor: **Terayama, Yasunori c/o Sony**
**Corporation**
**Patent Division 6-7-35 Kitashinagawa**
**Shinagawa-ku Tokyo 141 (JP)**
Inventor: **Nakamura, Masashi c/o Sony**
**Corporation**
**Patent Division 6-7-35 Kitashinagawa**
**Shinagawa-ku Tokyo 141 (JP)**
Inventor: **Fujiie, Kazuhiko c/o Sony Corporation**
**Patent Division 6-7-35 Kitashinagawa**
**Shinagawa-ku Tokyo 141 (JP)**
Inventor: **Yoshitoshi, You c/o Sony Corporation**
**Patent Division 6-7-35 Kitashinagawa**
**Shinagawa-ku Tokyo 141 (JP)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to an optical pickup in which an objective lens holder is slidably and pivotably supported by a support shaft.

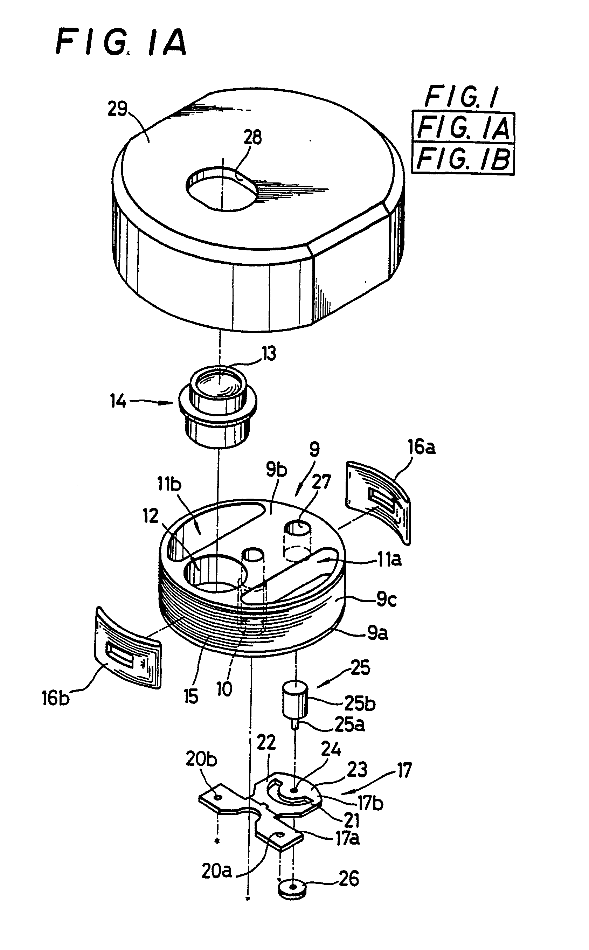

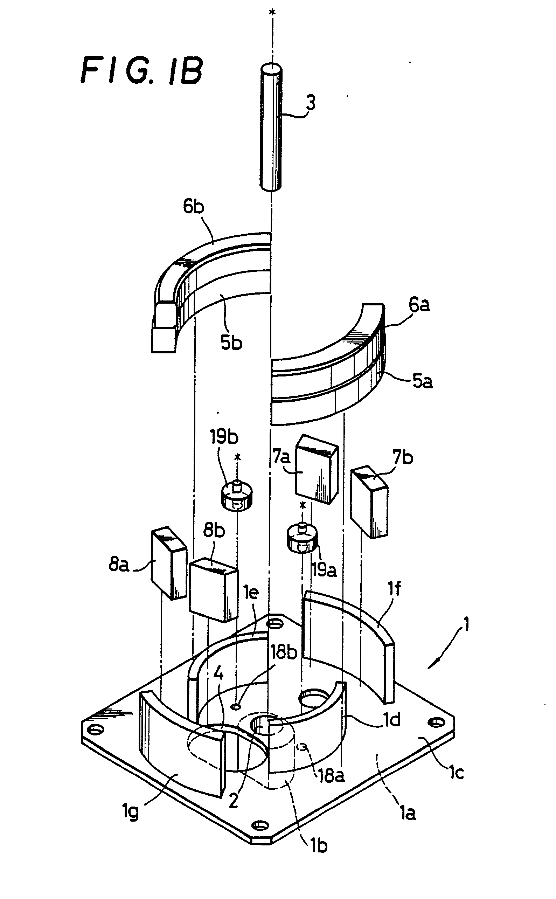

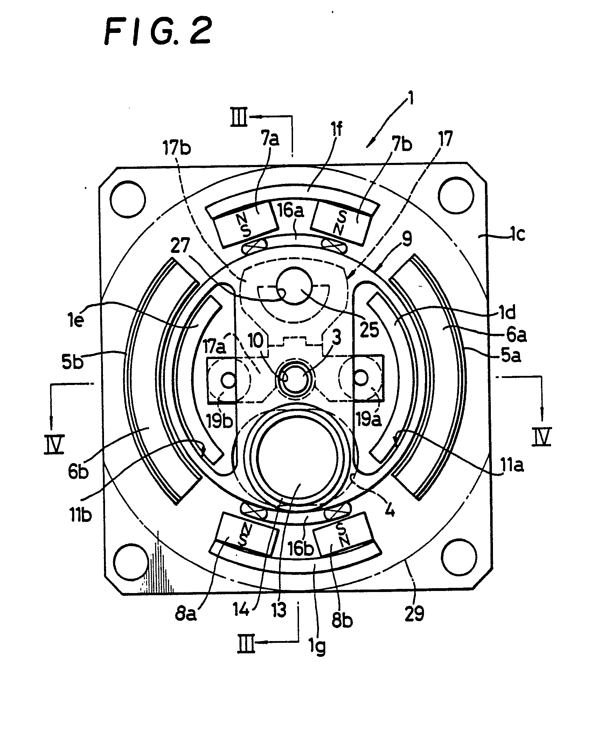

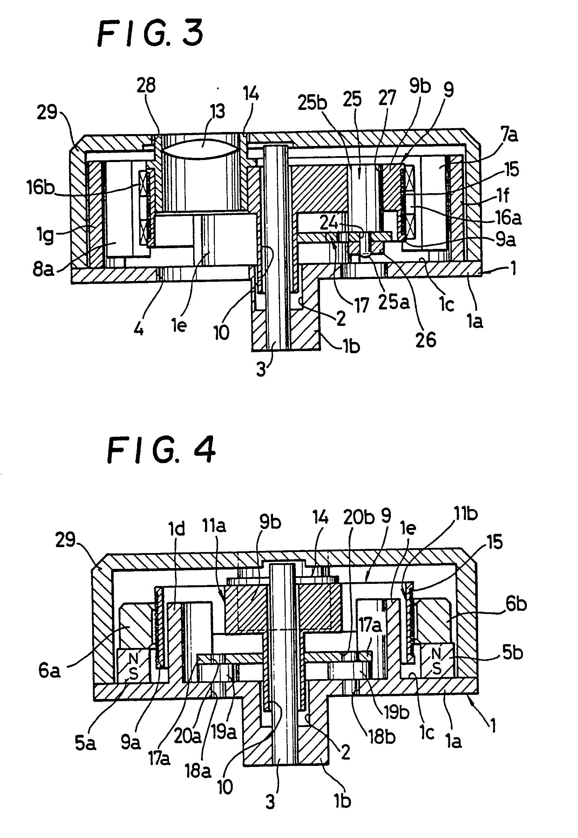

Figures 1 to 4 show a conventional optical pick-up of this kind wherein a tubular projection 1b extends downward from the central portion of a lower surface 1a of a base 1. A pair of first yokes 1d and 1e oppose each other near the centre of an upper surface 1c of the base 1 on opposite sides of a support shaft 3 having its lower end inserted into an inner hole 2 of the projection 1b. A pair of second yokes 1f and 1g similarly oppose each other near the periphery of the upper surface 1c of the base 1 on opposite sides of the support shaft 3.

The base 1, the projection 1b, the first yokes 1d and 1e and the second yokes 1f and 1g are integrally formed of a magnetic material. An elongate optical window 4 is formed in the base 1 so as to allow a laser beam to pass therethrough.

A pair of first magnets 5a and 5b are mounted on the upper surface 1c of the base 1 so that they extend along the outer circumferential surfaces of the first yokes 1d and 1e at predetermined distances therefrom. A pair of third yokes 6a and 6b are mounted on the upper surfaces of the first magnets 5a and 5b, respectively. Pairs of rectangular, second magnets 7a and 7b, and 8a and 8b are fixed to the inner circumferential surfaces of the second yokes 1f and 1g, respectively.

An objective lens holder 9 comprises a flat cylindrical portion 9a and an end disc 9b mounted at the upper portion of the cylindrical portion 9a. The holder 9 is formed of a non-magnetic material.

A bearing hole 10 is formed at the central axis position of the holder 9 and receives the upper portion of the support shaft 3. The objective lens holder 9 is supported to be pivotable about the axis of the support shaft 3 and to be slidable along the support shaft 3 in the axial direction thereof.

A pair of insertion holes 11a and 11b are formed in the end disc 9b of the holder 9 so as to be located on opposite sides of the bearing hole 10. The distal ends of the first yokes 1d and 1e engage in the insertion holes 11a and 11b, respectively. A lens hole 12 is formed at a location between the insertion holes 11a and 11b and separated from the bearing hole 10. A lens barrel 14 holding an objective lens 13 therein is inserted in the lens hole 12.

A focusing coil 15 is wound circumferentially around a circumferential side wall 9c of the holder 9. Two tracking coils 16a and 16b are adhered to the surface of the focusing coil 15 so as to oppose each other on opposite sides of the support shaft 3 and to oppose the inner surfaces of the second magnets 7a and 7b, and 8a and 8b, respectively.

Thus, a first magnetic circuit is formed by the first yokes 1d and 1e, the third yokes 6a and 6b, and the first magnets 5a and 5b. A second magnetic circuit is formed by the second yokes 1f and 1g and the second magnets 7a, 7b, 8a and 8b.

When current is supplied to the focusing coil 15, the objective lens holder 9 is caused to slide along the axial direction of the support shaft 3 so as to perform focusing. When a current is supplied to the tracking coils 16a and 16b, the holder 9 is caused to pivot about the axis of the support shaft 3 so as to perform tracking.

So that when the tracking power for pivoting the holder 9 about the axis of the support shaft 3 is released the holder 9 is automatically returned to its neutral position, an elastic support member 17 as a neutral position holding mechanism is inserted between the base 1 and the objective lens holder 9.

The elastic support member 17 is formed by welding an elastic support plate 17b of silicone rubber or like material to one end of a mounting member 17a, e.g., a metal plate.

A pair of holes 18a and 18b are formed in the base 1 so as to oppose each other on opposite sides of the support shaft 3 and respectively receive one end of each of a pair of mounts 19a and 19b. The other end of each of the mounts 19a and 19b is received in a corresponding one of a pair of small holes 20a and 20b formed in the mounting member 17a. In this manner, the elastic support member 17 is mounted on the base 1 through the pair of mounts 19a and 19b.

The elastic support plate 17b comprises an integral assembly of first and second arms 21 and 22 which extend in diverging directions, from one side of the mounting member 17a away from the support shaft 3 within a plane substantially perpendicular to the axis of the support shaft 3, and a connecting portion 23 connecting the first and second arms 21 and 22. A small hole 24 formed in a central portion of the connecting portion 23 receives a small-diameter portion 25a at one end of a balancer pin 25 made of a plastics or like material. A collar 26 engages the end portion of the small-diameter portion 25a so as to couple the elastic support member 17 and the balancer pin 25.

A large-diameter portion 26b at the other end of the balancer pin 25 is fitted in a through hole 27 formed in a portion of the holder 9 which is spaced from the axis of the support shaft 3, thereby coupling the objective lens holder 9 with the elastic support member 17 through the balancer pin 25.

The objective lens holder 9 is housed in a housing cover 29 having an elongate opening 28 at a position corresponding to the objective lens 13.

In the convention optical pick-up as described above, a clearance of about 20 μm is present between the support shaft 3 and the bearing hole 10 formed in the objective lens holder 9. For this reason, when the optical pick-up is subjected to vibration, the objective lens holder 9 shakes and the objective lens 13 is abruptly displaced.

When a tracking servo cannot compensate for such a displacement, a track jump is made and normal recording/reproducing cannot be performed. An optical pickup of the kind described above thus has a poor vibration resistance.

Patent specification EP—A—68757 discloses an optical pick-up wherein a resilient positioning member similar to the elastic support member 17 is provided, the resilient positioning member yeildably resisting axial and rotary movements of the objective lens holder to effect focusing and tracking and being effective to return the objective lens holder both axially and rotationally to its neutral position when driving currents are no longer applied to the focusing and tracking coils.

It is the object of the invention to provide an optical pick-up having good vibration resistance.

According to one aspect of the invention there is provided an optical pick-up comprising an objective lens holder holding an objective lens therein, a support shaft which supports the objective lens holder such that the objective lens holder is slidable along the support shaft in an axial direction and pivotable about the axis thereof, characterised in that biassing means are provided to press the objective lens holder against the support shaft, the biassing means comprising a magnetic member fixed to the objective lens holder and opposed by a magnet, the objective lens holder being biassed in a direction perpendicular to the support shaft by the force of the magnet.

According to another aspect of the invention there is provided an optical pick-up comprising an objective lens holder holding an objective lens therein and having a bearing hole, a support shaft which is received in the bearing hole with a clearance and supports the objective lens holder such that the objective lens holder is slidable along the support shaft in a axial direction and is pivotable about the axis thereof, characterised in that biassing means are provided to press the objective lens holder against the support shaft, the biassing means comprising an elastic member interposed between the objective lens holder and a base to which the support shaft is fixed and effective to bias the objective lens holder in a direction perpendicular to the support shaft by the elastic force of the elastic member to prevent vibration.

Since the objective lens holder is biassed against the support shaft by a press member, shaking of the objective lens holder can be reduced to a minimum even if there is a clearance between the objective lens holder and the support shaft.

The invention is diagrammatically illustrated by way of example in the accompanying drawings, in which:-

Figures 1 to 4 show a conventional optical pick-up, in which Figure 1 is an exploded perspective view, Figure 2 is a plan view, Figure 3 is a sectional side view taken on line III—III in Figure 2, and Figure 4 is a sectional side view taken on line IV—IV in Figure 2;

Figure 5 is a plan view showing an embodiment of an optical pick-up according to the invention;

Figure 6 is a plan view showing a biassing member used in the embodiment shown in Figure 5;

Figure 7 is a side view illustrating a method of effecting a vibration test;

Figure 8 is a graph showcng the results obtained by such a vibration test; and

Figure 9 is a plan view similar to Figure 5 showing a modification of an optical pick-up according to the invention.

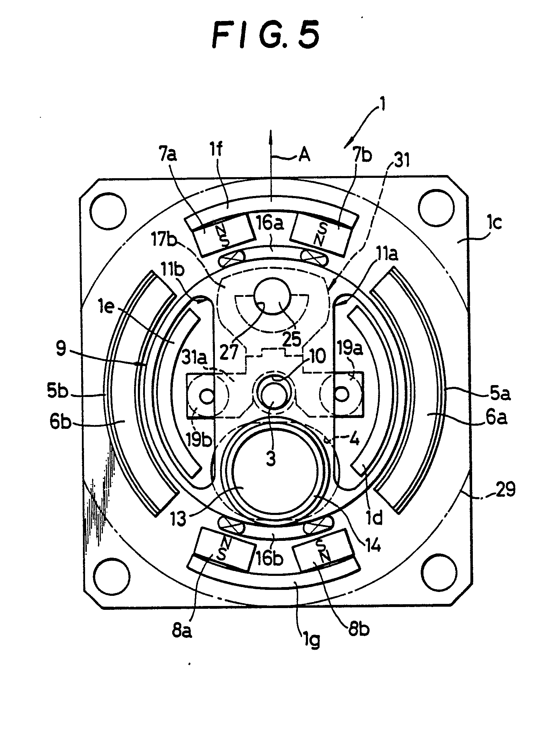

Referring to Figures 5 to 8, small holes 20a and 20b of a mounting member 31a of an elastic support member 31 are at positions further separated from the elastic support plate 17b than in the mounting member 17a. For this reason, a distance $l$ between the small holes 20a and 20b and a small hole 24 is larger than that in the elastic support member 17 by 0.4 to 0.6 µm. The optical pick-up of this embodiment of the invention is basically the same as the conventional optical pick-up except in the above respect.

The elastic support member 31 is mounted on a base 1 through mounts 19a and 19b such that the holes 20a and 20b correspond to the holes 18a and 18b opposing each other on opposite sides of the support shaft 3 interposed therebetween. For this reason, the balancer pin 25 having a small-diameter portion 25a inserted in the small hole 24 is further separated from the support shaft 3 than in the conventional optical pick-up.

As a result, the objective lens holder 9 fitted with a large-diameter portion 25b of the balancer pin 25 is shifted in the direction indicated by arrow A relative to the support shaft 3 compared with the conventional optical pick-up. Therefore, in this embodiment, as shown in Figure 5, the inner circumferential surface of the bearing hole 10 is elastically biassed toward the outer circumferential surface of the support shaft 3 in the direction indicated by the arrow A, i.e., in a direction perpendicular to the tracking direction. Shaking of the objective lens holder 9 is thus reduced to a minimum.

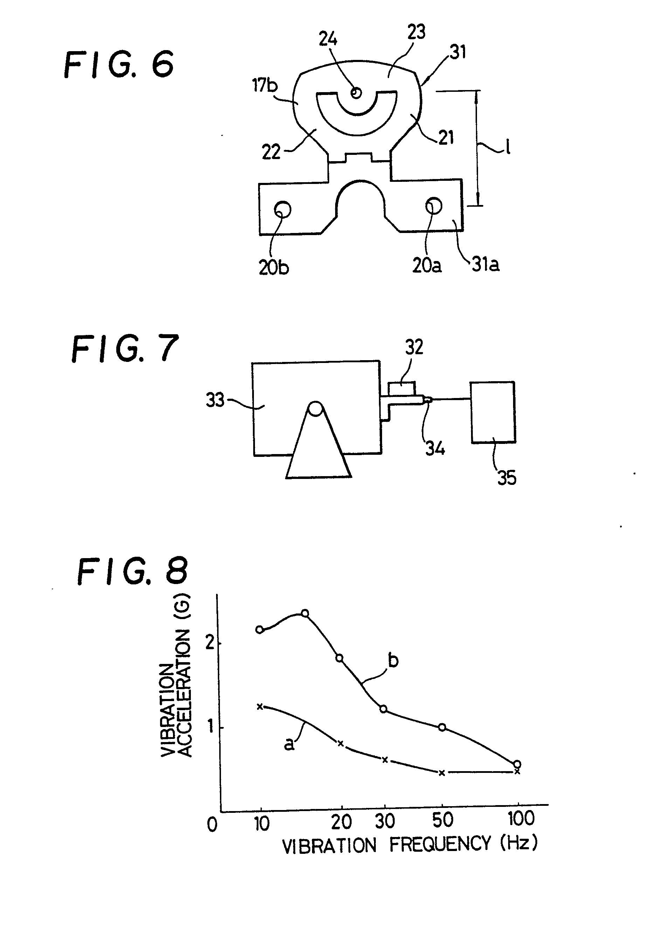

Figure 7 shows a method for effecting a vibration test of the optical pick-up. In this vibration test, an optical disc player 32 mounting an optical pick-up was vibrated by monotonous sinusoidal wave by a vibrator 33 within a horizontal plane and in a direction 30° rotated from the tracking direction. Acceleration of the player 32 was measured by an acceleration pick-up 34 and was read by a charge amplifier 35.

Figure 8 shows the results obtained by the vibration test; it shows the vibration accelaration as a function of frequency when a sound drop-out is caused. As can be seen by comparing curve a of a conventional optical pick-up and curve b of an optical pick-up according to the invention, the optical pick-up according to the invention has much better vibration resistance.

In the above embodiment, the length *l* of the elastic support member 31 is increased so as to bias the inner circumferential surface of the bearing hole 10 elastically against the outer circumferential surface of the support shaft 3 in the direction indicated by arrow A. However, the inner cifcumferential surface of the bearing hole 10 can be elastically biassed against the outer circumferential surface of the support shaft 3 in the direction indicated by the arrow A, by forming the holes 18a and 18b in positions close to the yoke 1f or by pulling the objective lens holder 9 toward the yoke 1f by a rubber cord or the like.

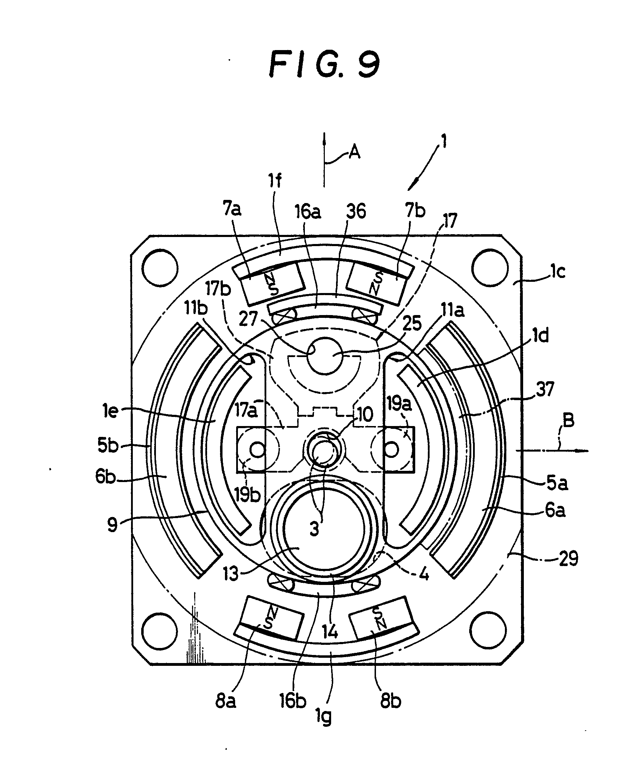

As shown in Figure 9, the inner circumferential surface of the bearing hole 10 can be magnetically pressed against the outer circumferential surface of the support shaft 3 in the direction of the arrow A by mounting a magnetic plate 36 overlapping the tracking coil 16a so as to oppose the magnets 7a and 7b and allowing the magnets 7a and 7b to attract the magnetic plate 36. The magnetic plate 36 can be a plate member of an amorphous magnetic material which can be formed into a thin plate, or a plate member of a non-magnetic material coated with a magnetic paint.

The biassing direction need not be the direction A and can be a direction opposite to the direction A. If desired it can be the tracking direction which is perpendicular to the arrow A. In order to achieve a direction indicated by arrow B and perpendicular to the arrow A as the biassing direction, as shown in Figure 9, a magnetic plate 37 is· mounted overlapping the focusing coil 15 so as to oppose the magnet 5a and to allow the magnet 5a to attact the magnetic plate 37.

In the various embodiments of the invention even if there is a clearance between the objective lens holder 9 and the support shaft 3, shaking of the objective lens holder 9 due to the presence of this clearance will be extremely small, so that an optical pick-up with a good vibration resistance can be obtained.

## Claims

1. An optical pick-up comprising an objective lens holder (9) holding an objective lens (13) therein, a support shaft (3) which supports the objective lens holder (9) such that the objective lens holder (9) is slidable along the support shaft (3) in an axial direction and pivotable about the axis thereof, characterised in that biassing means (36 or 37) are provided to press the objective lens holder (9) against the support shaft (3), the biassing means comprising a magnetic member (36 or 37) fixed to the objective lens holder (9) and opposed by a magnet (7a, 7b), the objective lens holder (9) being biassed in a direction (A or B) perpendicular to the support shaft by the force of the magnet (7a, 7b).

2. An optical pick-up according to claim 1, wherein the magnetic member comprises a plate member (36, 37) made of an amorphous magnetic material.

3. An optical pick-up according to claim 1, wherein the magnetic member (36, 37) comprises a plate member of a non-magnetic material and coated with a magnetic paint.

4. An optical pick-up according to any one of claims 1 to 3, wherein the biassing direction (A) is a direction perpendicular to the tracking direction.

5. An optical pick-up according to any one of claims 1 to 3, wherein the biassing direction (B) is the tracking direction.

6. An optical pick-up comprising an objective lens holder (9) holding an objective lens (13) therein and having a bearing hole (10), a support shaft (3) which is received in the bearing hole (10) with a clearance and supports the objective lens holder (9) such that the objective lens holder (9) is slideable along the support shaft (3) in an axial direction and is pivotable about the axis thereof, characterised in that biassing means (17a and 17b) are provided to press the objective lens holder (9) against the support shaft (3), the biassing means comprising an elastic member (17b) interposed between the objective lens holder (9) and a base (1) to which the support shaft (3) is fixed and effective to bias the objective lens holder (9) in a direction (A) perpendicular to the support shaft (3) by the elastic force of the elastic member (17b) to prevent vibration.

7. An optical pick-up according to claim 6, wherein the elastic member (17b) is interposed between the base (1) and the objective lens holder (9) such that the elastic member (17b) is compressed.

8. An optical pick-up according to claim 2, wherein the elastic member (17b) is interposed between the base (1) and the objective lens holder (9) such that the elastic member (17b) is stretched.

9. An optical pickup according to any one of claims 6 to 8, wherein the biassing direction (A) is a direction perpendicular to the tracking direction.

10. An optical pick-up according to any one of claims 6 to 8, wherein the biassing direction (A) is the tracking direction.

## Patentansprüche

1. Optischer Aufnahmekopf
mit einem Objekivhalter (9), in dem ein Objektiv (13) gefaßt ist,
mit einer Trägerwelle (3), auf der der Objektivhalter (9) in Richtung ihrer Achse verschiebbar und um diese Achse drehbar gelagert ist, dadurch gekennzeichnet,
daß Vorspannmittel (36 oder 37) vorgesehen sind, die den Objektivhalter (9) gegen die Trägerwelle (3) drücken und die ein an dem Objektivhalter (9) befestigtes magnetisches Teil (36 oder 37) umfassen, dem ein Magnet (7a, 7b) gegenüberliegt,
wobei der Objektivhalter (9) durch die Kraft des Magneten (7a, 7b) in einer zu der Trägerwelle (3) senkrechten Richtung (A oder B) vorgespannt ist.

2. Optischer Aufnahmekopf nach Anspruch 1, bei dem das magnetische Teil eine aus einem amorphen magnetischen Werkstoff bestehende Platte (36, 37) aufweist.

3. Optischer Aufnahmekopf nach Anspruch 1, bei dem das magnetische Teil (36, 37) eine Platte aus nichtmagnetischem Werkstoff aufweist, die mit einer magnetischen Beschichtung versehen ist.

4. Optischer Aufnahmekopf nach einem der Ansprüche 1 bis 3, bei dem die Richtung (A) der Vorspannung senkrecht zur Spurrichtung verläuft.

5. Optischer Aufnahmekopf nach einem der Ansprüche 1 bis 3, bei dem die Richtung (B) der Vorspannung die Spurrichtung ist.

6. Optischer Aufnahmekopf

mit einem Objectivhalter (9), in dem ein Objektive (13) gefaßt ist und der eine Lagerbohrung (10) aufweist,

mit einer Trägerwelle (3), die mit Spiel in der Lagerbohrung (10) aufgenommen ist und auf der der Objektivhalter (9) in Richtung ihrer Achse verschiebbar und um diese Achse drehbar gelagert ist, dadurch gekennzeichnet,

daß Vorspannmittel (17a und 17b) vorgesehen sind, die den Objektivhalter (9) gegen die Trägerwelle (3) drücken,

daß die Vorspannmittel ein elastiches Glied (17b) umfassen, das zwischen dem Objektivhalter (9) und einer Basis (1) angeordnet ist, an der die Trägerwelle (3) befestigt ist,

und daß der Objektivhalter (9) zur Verhinderung von Vibrationen von der federelastischen Kraft des elastischen Glieds (17b) in einer zu der Trägerwelle (3) senkrechten Richtung (A) vorgespannt ist.

7. Optischer Aufnahmekopf nach Anspruch 6, bei dem das elastische Glied (17b) so zwischen der Basis (1) und dem Objektivhalter (9) angeordnet ist, daß es (17b) komprimiert wird.

8. Optischer Aufnahmekopf nach Anspruch 6, bei dem das elastische Glied (17b) so zwischen der Basis (1) und dem Objektivhalter (9) angeordnet ist, daß es (17b) gedehnt wird.

9. Optischer Aufnahmekopf nach einem der Ansprüche 6 bis 8, bei dem die Richtung (A) der Vorspannung senkrecht zur Spurrichtung verläuft.

10. Optischer Aufnahmekopf nach einem der Ansprüche 6 bis 8, bei dem die Richtung (B) der Vorspannung die Spurrichtung ist.

**Revendications**

1. Capteur optique comprenant un support (9) de lentille d'objectif dans lequel une lentille d'objectif (13) est supportée, une tige-support (3) qui supporte le support de lentille d'objectif (9) de manière que celui-ci (9) puisse coulisser le long de la tige-support (3) dans une direction axiale et puisse pivoter autour de son axe, caractérisé en ce que des moyens de sollicitation (36 ou 37) sont prévus pour appuyer le support de lentille d'objectif (9) contre la tige-support (3), les moyens de sollicitation comprenant un élément magnétique (36 ou 37) fixé au support de lentille d'objectif (9) et disposé en vis-à-vis d'un aimant (7a, 7b), le support de lentille d'objectif (9) étant sollicité, dans une direction (A ou B) perpendiculaire à la tige-support, par la force de l'aimant (7a, 7b).

2. Capteur optique selon revendication 1, dans lequel l'élément magnétique comprend une élément méplat (36, 37) fait d'un matériau magnétique amorphe.

3. Capteur optique selon revendication 1, dans lequel l'élément magnétique (36, 37) comprend un élément méplat en matériau non magnéique, revêtu d'une peinture magnétique.

4. Capteur optique selon l'une quelconque des revendications 1 à 3, dans lequel la direction de sollicitation (A) est une direction perpendiculaire à la direction du suivi de piste.

5. Capteur optique selon l'une quelconque des revendications 1 à 3, dans lequel la direction de sollicitation (B) est la direction du suivi de piste.

6. Capteur optique comprenant un support de lentille d'objectif (9) supportant une lentille d'objectif (13) et doté d'un trou d'appui (10), une tige-support (3) étant reçue dans trou d'appui (10) avec du jeu et supportant le support de lentille d'objectif (9) de manière que celui-ci (9) puisse coulisser le long de la tige-support (3) dans une direction axiale et puisse pivoter autour de son axe, caractérisé en ce que des moyens de sollicitation (17a et 17b) sont prévus pour appuyer le support de lentille d'objectif (9) contre la tige-support (3), les moyens de sollicitation comprenant un élément élastique (17b) interposé entre le support de lentille d'objectif (9) et une base (1) à laquelle la tige-support (3) est fixée, et ayant pour effet de solliciter le support de lentille d'objectif (9) dans une direction (A) perpendiculaire à la tige-support (3), par la force élastique de l'élément élastique (17b), pour empêcher les vibrations.

7. Capteur optique selon revendication 6, dans lequel l'élément élastique (17b) est interposé entre la base (1) et le support de lentille d'objectif (9), de manière que l'élément élastique (17b) soit comprimé.

8. Capteur optique selon revendication 2, dans lequel l'élément élastique (17b) est interposé entre la base (1) et le support de lentille d'objectif (9), de manière que l'élément élastique (17b) soit étiré.

9. Capteur optique selon l'une quelconque des revendications 6 à 8, dans lequel la direction de sollicitation (A) est une direction perpendiculaire à la direction du suivi de piste.

10. Capteur optique selon l'une quelconque des revendications 6 à 8, dans lequel la direction de sollicitation (A) est la direction du suivi de piste.

# FIG. IA

29
28

FIG. I
FIG. IA
FIG. IB

13
14

9
9b
27
16a

11b
12
11a

9c
9a

16b
15
10
25
25b
25a

22
24
23
17
20b
17b
21
17a
20a
26

EP 0 176 332 B1

FIG. 1B

# FIG. 2

## FIG. 3

## FIG. 4

# F I G. 5

FIG. 6

FIG. 7

FIG. 8

VIBRATION ACCELERATION (G)

VIBRATION FREQUENCY (Hz)

# FIG. 9